# FASCICULE DE BREVET EUROPEEN

(11) **EP 2 159 598 B1**
(45) Date de publication et mention de la délivrance du brevet: **10.07.2013**
(21) Numéro de dépôt: 09166838.4
(22) Date de dépôt: 30.07.2009
(51) Int. Cl.: G01S 7/38

(54) **Méthode de géneration de faux échos vers un détecteur qui émet un signal puis qui détecte des échos du signal**
Verfahren zur Erzeugung von falschen Echos für einen Detektor, der ein Signal überträgt und dann seine Echos empfängt
Method for the generation of false echoes for a detector that transmits a signal and then receives its echoes

(30) Priorité: 29.08.2008 FR 0804766
(43) Date de publication de la demande: 03.03.2010
(73) Titulaire: Thales, 92200 Neuilly Sur Seine (FR)
(72) Inventeur: Fabre, Jean-Paul, 75010, PARIS (FR)
(74) Mandataire: Lucas, Laurent Jacques

(56) Documents cités:
- EP-A1- 1 684 089
- US-A- 4 006 478
- US-A- 4 823 139
- US-A- 4 990 920

## Description

La présente invention concerne notamment une méthode et un dispositif pour générer de faux échos vers un détecteur qui émet un signal puis qui détecte des échos de ce signal. De manière générale, elle peut s'appliquer dans le domaine de la détection, comme les radars par exemple.

Un brouilleur multi-échos est un dispositif d'écoute et d'émission d'ondes électromagnétiques qui, lorsqu'il reçoit des signaux qu'il reconnaît comme ayant été émis par un radar, émet des signaux à la même fréquence porteuse de manière à parasiter la rétro-diffusion des signaux. Ainsi, le radar reçoit les signaux émis par le brouilleur et les interprète à tort comme ses propres impulsions rétro-diffusées. Le traitement numérique par le radar de ces « faux échos » aboutit à la création de fausses pistes radars et finalement à la saturation du radar. Une difficulté consiste à faire créer par le radar de fausses pistes dans des directions différentes et à des distances différentes. Il s'agit là de l'un des problèmes techniques que la présente invention se propose de résoudre.
Une solution consiste à utiliser un brouilleur lourd comportant un émetteur de forte puissance couplé à une mémoire DRFM (« Digital Radio Frequency Memory »). La DRFM permet de générer plusieurs impulsions étalées dans le temps, de sorte que le radar les interprète comme des échos provenant de cibles à des distances différentes. Il faut noter que même si l'utilisation des DRFM est devenue courante dans les brouilleurs, leur coût reste cependant non négligeable. La DRFM permet de générer de faux échos provenant de cibles à des distances différentes, mais elle ne permet pas de générer des faux échos provenant de cibles dans des directions différentes. C'est l'émetteur de forte puissance qui permet de générer des faux échos provenant de cibles dans des directions différentes, car il est capable de pénétrer par les lobes diffus du radar même sans disposer le brouilleur à proximité immédiate du radar. Mais le coût d'un émetteur forte puissance est souvent jugé prohibitif dans le cadre d'une application de brouillage.

Une tentative pour résoudre ce problème de coût consiste à utiliser plusieurs brouilleurs légers comportant un émetteur de faible puissance couplé à une DRFM. Du fait de leur faible puissance, ces brouilleurs doivent être déployés dans l'espace proche autour du radar. Leur puissance doit seulement être suffisante pour pénétrer par le lobe principal du radar lorsque celui-ci les éclaire. Implantés sur une plate-forme légère et peu coûteuse de type drone, plusieurs drones sont nécessaires pour obtenir l'effet souhaité. Ainsi, le radar reçoit de faux échos provenant de cibles dans des directions différentes correspondant aux différents brouilleurs. Pour générer en plus des faux échos provenant de cibles à des distances différentes, les brouilleurs sont équipés d'une DRFM. Cependant, le coût d'un tel brouilleur, en partie lié à la DRFM et aux sous-ensembles hyperfréquences associés, fait que l'on peut légitimement hésiter à l'installer sur un drone. En effet, le prix de revient de cette solution devient rapidement prohibitif au vu du taux de perte élevé des drones, ces plates-formes étant très vulnérables et quasiment consommables.

Il apparaît clairement que les solutions actuelles pour réaliser un brouillage multi-échos font appel à des dispositifs électroniques complexes et coûteux. Il s'agit là encore de l'un des problèmes techniques que la présente invention se propose de résoudre.

Le document US 4,823,139 décrit une méthode de contre-mesure radar dans laquelle le signal radar émis par un missile et reçu par deux avions en coopération est transmis de chaque avion vers l'autre avion avant d'être réémis vers le missile. Le document EP 1 684 089 A1 décrit une méthode de contre-mesure dans laquelle des messages sont échangés entre plusieurs stations de contre-mesure d'un système distribué afin d'optimiser l'utilisation des ressources des stations de contre-mesure. Le document US 4,006,478 décrit un dispositif comprenant deux transducteurs reliés par une ligne de transmission afin que le signal reçu par un premier transducteur soit émis par le deuxième transducteur, et vice-versa.

L'invention a notamment pour but de pallier certains des inconvénients précités, en permettant de générer un grand nombre de faux échos dans des directions et à des distances différentes, ceci sans utiliser de DRFM ni d'émetteur de forte puissance. Un principe de l'invention est de remplacer le retard temporel introduit par la DRFM pour générer plusieurs échos provenant de distances différentes, par un trajet dans l'espace qui lui-même introduit un retard. A cet effet, l'invention a notamment pour objet une méthode pour générer de faux échos vers un détecteur qui émet un signal puis qui détecte les échos du signal. La méthode permet de générer une pluralité de faux échos provenant d'une pluralité de directions. Elle comporte, à des positions situées dans les directions d'où proviennent les faux échos, une étape de réception d'au moins une partie du signal et une étape d'émission d'un signal sensiblement identique audit signal, en direction du détecteur et en direction de chacune des autres positions. Le signal sensiblement identique est reçu à chacune des autres positions, d'où est émis à son tour un autre signal sensiblement identique en direction du détecteur et en direction de chacune des autres positions. Chaque position reçoit ainsi une pluralité de signaux sensiblement identiques au signal émis par le détecteur et émet une pluralité de signaux sensiblement identiques vers le détecteur, de telle sorte que le détecteur détecte, provenant de chacune des directions dans lesquelles est située une position, une pluralité de faux échos qui se suivent dans le temps.
Avantageusement, chaque pluralité de faux échos qui se suivent dans le temps en provenance d'une direction donnée peut être interprétée par le détecteur comme correspondant à une pluralité de cibles situées à une pluralité de distances.

L'invention a également pour objet un dispositif pour générer de faux échos vers un détecteur qui émet un signal puis qui détecte des échos du signal. Le dispositif comporte une pluralité d'émetteur-récepteurs non colocalisés générant des faux échos. Chaque émetteur-récepteur émet, sur réception d'au moins une partie du signal émis par le détecteur, un signal sensiblement identique audit signal, en direction du détecteur et en direction des autres émetteur-récepteurs. Le signal sensiblement identique est reçu par les autres émetteur-récepteurs, qui émettent à leur tour un autre signal sensiblement identique en direction du détecteur et en direction des autres émetteur-récepteurs. Chaque émetteur-récepteur reçoit ainsi une pluralité de signaux sensiblement identiques au signal émis par le détecteur et émet une pluralité de signaux sensiblement identiques vers le détecteur, de telle sorte que le détecteur détecte, provenant de chacune des directions dans lesquelles est situé un émetteur-récepteur, une pluralité de faux échos qui se suivent dans le temps.
Avantageusement, le détecteur peut interpréter chaque pluralité de faux échos qui se suivent dans le temps en provenance d'une direction dans laquelle est situé un émetteur-récepteur comme correspondant à une pluralité de cibles situées à une pluralité de distances.

Dans un mode de réalisation préférentiel, les émetteur-récepteurs peuvent être mobiles et émettre, sur réception du signal émis par le détecteur et sur réception d'un signal émis par un émetteur-récepteur, un signal sensiblement identique dans toutes les directions.
Avantageusement, les émetteur-récepteurs peuvent être large bande.
Les émetteur-récepteurs peuvent être activés à distance grâce à une télécommande.
Avantageusement, les émetteur-récepteurs peuvent comporter un dispositif permettant de cesser d'émettre avant réception d'un nouveau signal émis par le détecteur. Par exemple, il peut comporter un dispositif permettant, sur réception d'un signal, de discriminer le signal émis par le détecteur des signaux émis par les autres émetteur-récepteurs, ainsi qu'un compteur permettant de mesurer le temps écoulé depuis la réception du signal émis par le détecteur, de manière à cesser d'émettre avant qu'un délai égal à l'intervalle de temps séparant deux signaux émis par le détecteur ne soit écoulé.
Par exemple, les émetteur-récepteurs peuvent comporter un circulateur ou un commutateur pour activer alternativement une chaîne de réception ou une chaîne de transmission.
Par exemple, la chaîne de réception ou la chaîne de transmission peut comporter des amplificateurs basés sur les technologies Arséniure de Gallium ou Nitrure de Gallium.
Avantageusement, les émetteur-récepteurs peuvent comporter un mélangeur pour moduler les signaux émis.

L'invention a encore pour principaux avantages qu'elle offre, de par la simplicité des dispositifs qu'elle met en oeuvre, un excellent taux de fiabilité.

D'autres caractéristiques et avantages de l'invention apparaîtront à l'aide de la description qui suit faite en regard de dessins annexés qui représentent :
- la figure 1, par un schéma, une illustration du principe de l'invention ;
- la figure 2, par un synoptique, un exemple d'émetteur-récepteur pouvant équiper des mini-brouilleurs selon l'invention ;
- la figure 3, par un diagramme de séquences, un exemple d'enchaînement de signaux échangés selon l'invention ;
- la figure 4, par un diagramme de séquences, un exemple de procédure de réinitialisation selon l'invention.

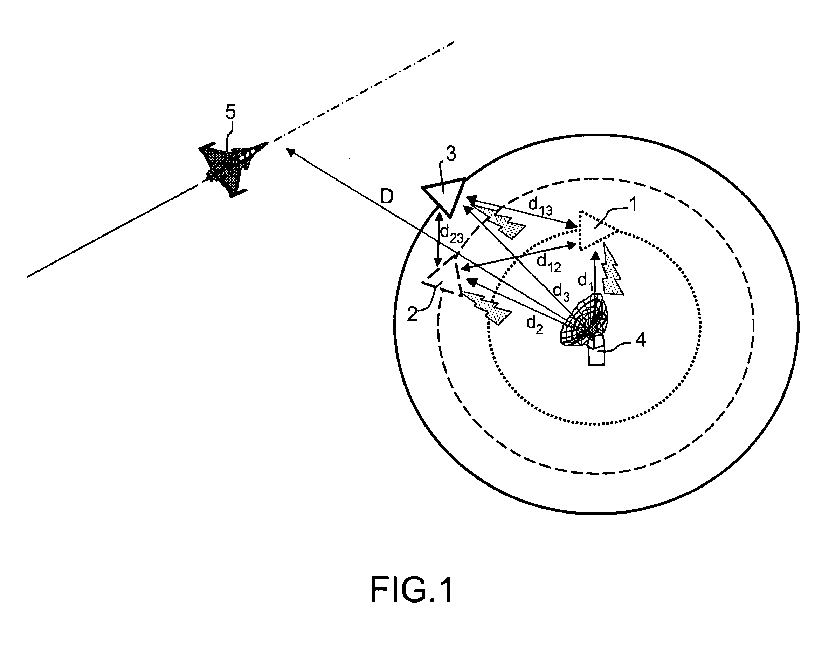

La figure 1 illustre par un schéma le principe de l'invention, qui permet à partir de seulement trois mini-brouilleurs 1, 2 et 3 selon l'invention de brouiller par exemple un radar 4, de telle sorte qu'il ne détecte pas un avion 5. Avantageusement, les mini-brouilleurs 1, 2 et 3 selon l'invention peuvent être portés par des drones. Chacun des trois mini-brouilleurs 1, 2 et 3 comporte un dispositif capable à la fois d'émettre et de recevoir des signaux. Un tel dispositif cumulant les fonctions d'émission et de réception est habituellement désigné sous la terminologie anglo-saxonne de « transceiver ». Dans la suite de la demande, un tel dispositif sera appelé « émetteur-récepteur ». Par exemple, chacun des mini-brouilleurs 1, 2 et 3 peut comporter un émetteur-récepteur large bande, de manière à recevoir et émettre dans une large bande de fréquence en fonction des menaces à couvrir. Dans un premier temps, chacun des mini-brouilleurs 1, 2 et 3 reçoit les signaux en provenance du radar 4 et les ré-émet dans toutes les directions, notamment vers le radar 4 et vers les autres mini-brouilleurs. Dans un deuxième temps, chacun des mini-brouilleurs 1, 2 et 3 reçoit les signaux ré-émis en provenance des autres mini-brouilleurs et les ré-émet à son tour dans toutes les directions, notamment vers le radar 4 et vers les autres mini-brouilleurs. Et ainsi de suite, les trois mini-brouilleurs 1, 2 et 3 forment un système de brouillage qui s'auto-entretient et qui sature rapidement de fausses pistes le radar 4, masquant ainsi l'avion 5.
Dans le présent exemple de réalisation, dès que les drones portant les mini-brouilleurs 1, 2 et 3 sont en position suffisamment proche du radar 4, leurs émetteur-récepteurs respectifs peuvent avantageusement être activés par un dispositif de télécommande. Mais les émetteur-récepteurs peuvent également être activés dès le lancement des drones. Dans l'exemple de la figure 1, les émetteur-récepteurs sont activés lorsque les mini-brouilleurs 1, 2 et 3 sont sensiblement dans la portée angulaire du radar 4, à des distances d₁, d₂ et d₃ du radar 4 respectivement, telles que d₁ < d₂ < d₃. L'avion 5 est quant à lui situé à une distance D du radar 4, telle que d₃ < D.

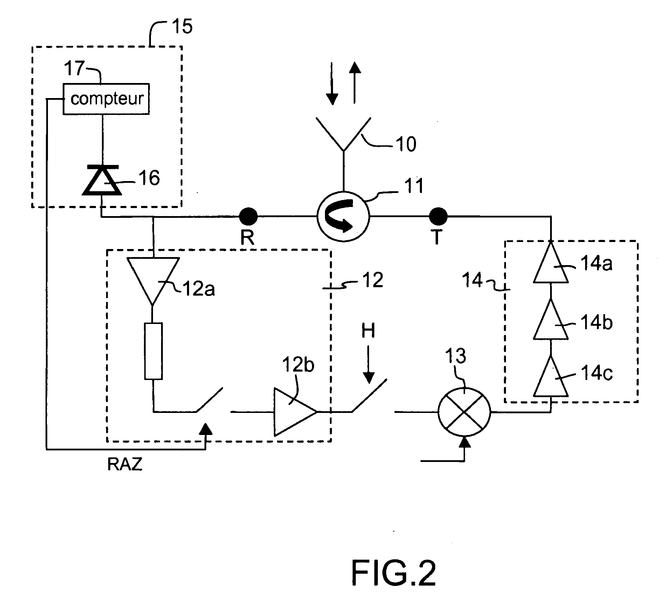

La figure 2 illustre par un synoptique un exemple d'émetteur-récepteur pouvant équiper les mini-brouilleurs 1, 2 et 3 selon l'invention. Dans le présent exemple de réalisation, où les mini-brouilleurs 1, 2 et 3 sont notamment mobiles et portés par des drones, l'émetteur-récepteur peut avantageusement comporter une antenne 10 omnidirectionnelle. Mais pour une couverture omnidirectionnelle, l'émetteur-récepteur pourrait aussi comporter deux antennes en forme de demi-hémisphères. L'antenne 10 fonctionne en réception et en transmission alternativement. C'est pourquoi, dans le présent exemple de réalisation, l'émetteur-récepteur comporte avantageusement un circulateur 11 séparant une chaîne de réception R et une chaîne de transmission T. Le circulateur 11 peut être remplacé par un commutateur. L'émetteur-récepteur comporte une chaîne d'amplification de bas niveau 12 pour la chaîne de réception R, la chaîne 12 comportant deux amplificateurs 12a et 12b. L'émetteur-récepteur comporte une horloge H permettant le séquencement des phases de réception et d'émission. Dans le présent exemple de réalisation, l'émetteur-récepteur comporte avantageusement un mélangeur 13 permettant en plus de moduler le signal émis. L'émetteur-récepteur comporte également une chaîne d'amplification de puissance 14 pour la chaîne de transmission T, la chaîne 14 comportant trois amplificateurs 14a, 14b et 14c. L'émetteur-récepteur peut avantageusement comporter un dispositif 15 de remise à zéro (RAZ), ce dispositif 15 comportant lui-même un dispositif 16 de détection ainsi qu'un compteur 17. Par exemple, l'émetteur-récepteur peut être alimenté en courant électrique par une batterie, non représentée sur la figure 2. Les amplificateurs 12a et 12b utilisés pour la chaîne d'amplification de bas niveau 12, ainsi que les amplificateurs 14a, 14b et 14c utilisés pour la chaîne de puissance 14, peuvent être par exemple basés sur les technologies Arséniure de Gallium (AsGa) ou Nitrure de Gallium (GaN). Par exemple, la chaîne de puissance 14 peut comporter un amplificateur état solide.

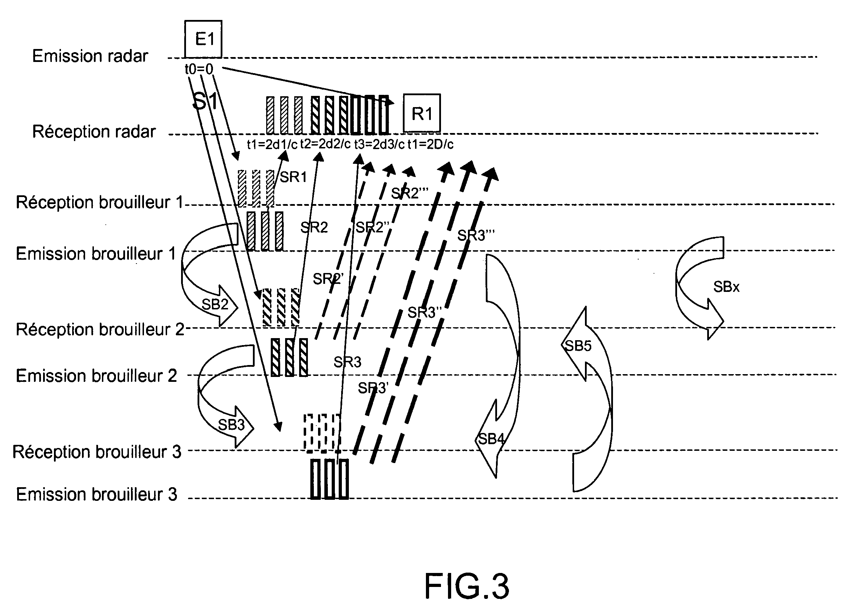

La figure 3 illustre par un diagramme de séquences un exemple d'enchaînement des signaux échangés entre le radar 4 et les mini-brouilleurs 1, 2 et 3 selon l'invention, à partir du moment où leurs émetteur-récepteurs sont activés.
Durant une phase d'émission E1, le radar 4 émet à un instant t₀=0 un signal impulsionnel initial S1 sensiblement dans la direction des mini-brouilleurs 1, 2 et 3. Le signal S1 en provenance du radar 4 est d'abord reçu par l'émetteur-récepteur du mini-brouilleur 1, qui ré-émet sensiblement le même signal impulsionnel que le signal S1 de façon sensiblement omnidirectionnelle. En effet, le cadencement des phases de réception et d'émission par l'horloge H peut entrainer un découpage temporel du signal reçu, de telle sorte que éventuellement seule une partie de S1 est reçue. Dans ce cas, le signal ré-émis par chaque émetteur-récepteur représente cette partie du signal S1 effectivement reçue. Notamment, le radar 4 reçoit un signal SR1 à un instant t₁=2d₁/c, où c est la vitesse de la lumière.
Puis, l'émetteur-récepteur du mini-brouilleur 2 reçoit le signal S1 émis par le radar 4. Son émetteur-récepteur ré-émet sensiblement le même signal impulsionnel que le signal S1 de façon sensiblement omnidirectionnelle. Notamment, le radar 4 reçoit un signal SR2 à un instant t₂=2d₂/c.
Puis, l'émetteur-récepteur du mini-brouilleur 3 reçoit le signal S1 émis par le radar 4. Son émetteur-récepteur ré-émet sensiblement le même signal impulsionnel que le signal S1 de façon sensiblement omnidirectionnelle. Notamment le radar 4 reçoit un signal SR3 à un instant t₃=2d₃/c.
Ainsi, à partir d'une seule impulsion initiale S1 émise par le radar 4, un train SR1-SR2-SR3 de trois impulsions sensiblement identiques à S1 sont émises vers le radar 4, les trois impulsions provenant de trois directions distinctes. L'horloge H est réglée à une fréquence suffisamment élevée pour que le radar 4 les interprète à tort comme des échos du signal S1 : ce sont de faux échos. Mais trois faux échos sont insuffisants pour saturer le radar 4. Pour obtenir un véritable brouillage multi-échos capable de saturer le radar 4, il faut générer une multitude d'impulsions vers le radar 4 depuis chacune des trois directions.
Or, lorsque le mini-brouilleur 1 ré-émet sensiblement le même signal impulsionnel que le signal S1 de façon sensiblement omnidirectionnelle, le mini-brouilleur 2 reçoit un signal SB2. Son émetteur-récepteur ré-émet sensiblement le même signal impulsionnel que le signal SB2 de façon sensiblement omnidirectionnelle. Notamment, le radar 4 reçoit un signal SR2'. De même, lorsque le mini-brouilleur 2 ré-émet sensiblement le même signal impulsionnel que le signal S1 de façon sensiblement omnidirectionnelle, le mini-brouilleur 3 reçoit un signal SB3. Son émetteur-récepteur ré-émet sensiblement le même signal impulsionnel que le signal SB3 de façon sensiblement omnidirectionnelle. Notamment, le radar 4 reçoit un signal SR3'.
De manière similaire, lorsque le mini-brouilleur 1 ré-émet sensiblement le même signal impulsionnel que le signal S1 de façon sensiblement omnidirectionnelle, le mini-brouilleur 3 reçoit un signal SB4. Son émetteur-récepteur ré-émet sensiblement le même signal impulsionnel que le signal SB4 de façon sensiblement omnidirectionnelle. Notamment, le radar 4 reçoit un signal SR3". De même, lorsque le mini-brouilleur 3 ré-émet sensiblement le même signal impulsionnel que le signal S1 de façon sensiblement omnidirectionnelle, le mini-brouilleur 2 reçoit un signal SB5. Son émetteur-récepteur ré-émet sensiblement le même signal impulsionnel que le signal SB5 de façon sensiblement omnidirectionnelle. Notamment, le radar 4 reçoit un signal SR2".
Et ainsi de suite, des signaux du type SBx, où x est entier non nul, se répètent entre les mini-brouilleurs 1, 2 et 3, comme par effet Larsen, provoquant l'émission vers le radar 4 d'une multitude de signaux du type SRx, SRx', SRx", SRx"', ..., SRx⁽ⁿ⁾, où n est entier non nul. Par exemple, des signaux SR2"' et SR3"' sont émis par les mini-brouilleurs 2 et 3 respectivement vers le radar 4. Ainsi, à partir d'une seule impulsion initiale S1 émise par le radar 4, une multitude d'impulsions sensiblement identiques à S1 sont émises vers le radar 4, les dites impulsions provenant de trois directions distinctes.

Durant une phase de réception R1, le radar 4 écoute l'environnement électromagnétique situé à la distance D dans la direction de l'avion 5. Durant la phase R1, le radar 4 est littéralement submergé de faux échos du type SRx, SRx', SRx", SRx"', ..., SRx⁽ⁿ⁾. Il faut noter que le temps séparant deux faux échos dépend non seulement des distances d₁, d₂ et d₃ du radar 4 aux mini-brouilleurs 1, 2 et 3 respectivement, mais qu'il dépend également des distances d₁₂, d₁₃ et d₂₃ entre les mini-brouilleurs 1 et 2, entre les mini-brouilleurs 1 et 3, et entre les mini-brouilleurs 2 et 3 respectivement. Avantageusement, toutes ces distances étant variables avec les mouvements des drones porteurs, le radar 4 reçoit de faux échos qui peuvent lui sembler provenir d'une multitude de distances. L'invention permet ainsi d'obtenir un effet équivalent à celui produit par une DRFM, et ceci à bien moindre coût. Le radar 4 peut alors générer une multitude de fausses pistes dans trois directions distinctes et à des distances multiples. Si le radar 4 est saturé, alors il ne détecte pas l'avion 5. Sinon, la vraie piste représentant l'avion 5 est masquée au milieu des fausses pistes.

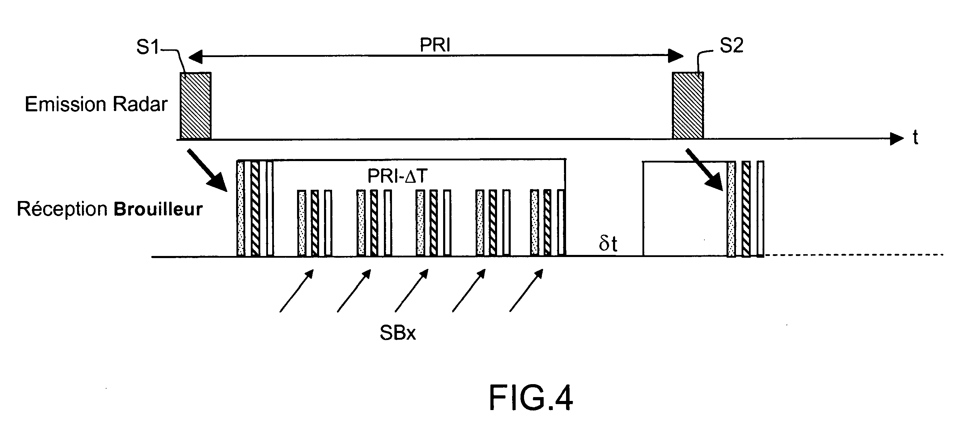

La figure 4 illustre par un diagramme de séquences un exemple de procédure de réinitialisation des mini-brouilleurs 1, 2 et 3 selon l'invention. En effet, pour que le radar 4 interprète les signaux qu'il reçoit comme étant les signaux réfléchis de l'impulsion S1, ou plus exactement afin que le radar 4 ne devine pas qu'il s'agit de faux échos, il faut à un moment donné interrompre la propagation des signaux de type SBx entre les mini-brouilleurs 1, 2 et 3 afin d'arrêter l'envoi de faux échos du type SRx⁽ⁿ⁾ vers le radar 4. Sinon, le radar 4 recevrait de faux échos même s'il arrêtait d'émettre des impulsions ! En quelques sortes, les mini-brouilleurs 1, 2 et 3 doivent suivre l'agilité de forme d'onde du radar 4. Dans le présent exemple de réalisation, la propagation entre les mini-brouilleurs 1, 2 et 3 est interrompue juste avant réception d'une autre impulsion S2 émise par le radar 4.
En effet, la forme d'onde du radar 4 est notamment caractérisée par l'intervalle de temps régulier entre deux impulsions successives identiques comme S1 et S2, cet intervalle étant couramment désigné par l'acronyme anglo-saxon PRI signifiant « Pulse Repetition Interval ». Or, selon la classe du radar 4 visé, le PRI est typique. Ainsi, connaissant le PRI du radar 4, l'émetteur-récepteur illustré par la figure 2 peut être « réinitialisé » juste avant réception de l'impulsion S2, de manière à arrêter la propagation entre les mini-brouilleurs 1, 2 et 3 et l'envoi de faux échos au radar 4. C'est le rôle du dispositif 15 de remise à zéro dans le présent exemple de réalisation, grâce notamment à son compteur 17 et à son dispositif 16 de détection de niveau. En effet, compte tenu de la puissance rayonnée par le radar 4, elle aussi typique de la classe du radar 4 visé, qui est de l'ordre de 90 décibel-watts (dBW), compte tenu de la puissance rayonnée par les mini-brouilleurs 1, 2 et 3, qui est de l'ordre de 5 à 20 watts (W), et compte tenu des distances relatives d₁, d₂, d₃ et D, qui sont de l'ordre de 10 à 30 kilomètres (km) pour D et de l'ordre de 2 à 5 km pour d₁, d₂ et d₃, il est facile de discriminer un signal Sx provenant du radar 4 d'un signal SBx provenant d'un autre mini-brouilleur. Ainsi, sur réception de l'impulsion S1 reconnue comme telle grâce au dispositif 16 de détection, le compteur 17 peut avantageusement être initialisé de manière à compter un délai PRI-ΔT où ΔT est une durée telle que PRI>>ΔT. A l'issue de ce délai PRI-ΔT, l'émetteur-récepteur peut avantageusement être maintenu bloqué pendant une durée δt suffisante pour arrêter la propagation des signaux du type SBx entre les mini-brouilleurs 1, 2 et 3. L'émetteur-récepteur peut ensuite être ré-activé sur réception de l'impulsion suivante S2 reconnue comme telle grâce au dispositif 16 de détection.

## Revendications

1. Méthode de génération de faux échos vers un détecteur (4), le détecteur émettant un signal radar (S1) puis détectant des échos du signal radar, la méthode permettant de générer une pluralité de faux échos provenant d'une pluralité de directions, la méthode comportant, à des positions situées dans les directions d'où proviennent les faux échos :
a) une étape de réception d'au moins une partie du signal radar (S1) ;
b') une étape d'émission d'un signal sensiblement identique audit signal (S1), en direction de chacune des autres positions (SBx) ;
la méthode étant **caractérisée en ce que** :
b") l'émission d'un signal sensiblement identique audit signal (S1) est aussi effectuée en direction du détecteur (SRx);
et **en ce que** :
ledit signal sensiblement identique est reçu à chacune des autres positions, d'où est émis à son tour un autre signal sensiblement identique en direction du détecteur (SRx') et en direction de chacune des autres positions (SBx), de telle sorte que chaque position reçoit une pluralité de signaux sensiblement identiques (SBx) au signal radar émis par le détecteur et émet une pluralité de signaux sensiblement identiques vers le détecteur (SRx, SRx', SRx", SRx"', ..., SRx⁽ⁿ⁾), qui détecte, provenant de chacune des directions dans lesquelles est située une position, une pluralité de faux échos (SRx, SRx', SRx", SRx"', ..., SRx⁽ⁿ⁾) qui se suivent dans le temps.

2. Méthode selon la revendication 1, **caractérisée en ce que** chaque pluralité de faux échos qui se suivent dans le temps en provenance d'une direction donnée (SR2, SR2', SR2", SR2"', ..., SR2⁽ⁿ⁾) est interprétée par le détecteur (4) comme correspondant à une pluralité de cibles situées à une pluralité de distances.

3. Dispositif de génération de faux échos vers un détecteur (4), le détecteur émettant un signal radar (S1) puis détectant des échos du signal radar, le dispositif comportant une pluralité d'émetteur-récepteurs non colocalisés générant des faux échos, le dispositif étant **caractérisé en ce que** chaque émetteur-récepteur est apte à émettre, sur réception d'au moins une partie du signal radar (S1) émis par le détecteur, un signal sensiblement identique audit signal, en direction du détecteur (SRx) et en direction des autres émetteur-récepteurs (SBx), ledit signal sensiblement identique étant reçu par les autres émetteur-récepteurs qui sont aptes à émettre à leur tour un autre signal sensiblement identique en direction du détecteur (SRx') et en direction des autres émetteur-récepteurs (SBx), de telle sorte que chaque émetteur-récepteur reçoit une pluralité de signaux sensiblement identiques (SBx) au signal radar émis par le détecteur et émet une pluralité de signaux sensiblement identiques (SRx, SRx', SRx", SRx"', ..., SRx⁽ⁿ⁾) vers le détecteur, qui détecte, provenant de chacune des directions dans lesquelles est situé un émetteur-récepteur, une pluralité de faux échos (SRx, SRx', SRx", SRx"', ..., SRx⁽ⁿ⁾) qui se suivent dans le temps.

4. Dispositif selon la revendication 3, **caractérisée en ce que** le détecteur (4) interprète chaque pluralité de faux échos qui se suivent dans le temps en provenance d'une direction dans laquelle est situé un émetteur-récepteur (SR2, SR2', SR2", SR2"', ..., SR2⁽ⁿ⁾) comme correspondant à une pluralité de cibles situées à une pluralité de distances.

5. Dispositif selon la revendication 3, **caractérisé en ce que** les émetteur-récepteurs sont mobiles et émettent, sur réception du signal radar (S1) émis par le détecteur et sur réception d'un signal (SBx) émis par un émetteur-récepteur, un signal sensiblement identique dans toutes les directions.

6. Dispositif selon la revendication 3, **caractérisé en ce que** les émetteur-récepteurs sont large bande.

7. Dispositif selon la revendication 3, **caractérisé en ce que** les émetteur-récepteurs sont activables à distance grâce à une télécommande.

8. Dispositif selon la revendication 3, **caractérisé en ce que** les émetteur-récepteurs comportent un dispositif (15) permettant de cesser d'émettre avant réception d'un nouveau signal radar (S2) émis par le détecteur (4).

9. Dispositif selon la revendication 8, **caractérisé en ce que** le dispositif (15) permettant de cesser d'émettre avant réception d'un nouveau signal radar émis par le détecteur comporte :
- un dispositif (16) permettant, sur réception d'un signal, de discriminer le signal radar émis (S1) par le détecteur (4) des signaux émis par les autres émetteur-récepteurs (SBx) ;
- un compteur (17) permettant de mesurer le temps écoulé depuis la réception du signal radar (S1) émis par le détecteur ;
de manière à cesser d'émettre avant qu'un délai (PRI) égal à l'intervalle de temps séparant deux signaux radar émis par le détecteur ne soit écoulé.

10. Dispositif selon la revendication 3, **caractérisé en ce que** les émetteur-récepteurs comportent un circulateur (11) ou un commutateur pour activer alternativement une chaîne de réception (R) ou une chaîne de transmission (T).

11. Dispositif selon la revendication 10, **caractérisé en ce que** la chaîne de réception (R) ou la chaîne de transmission (T) comporte des amplificateurs (12a, 12b, 14a, 14b, 14c) basés sur les technologies Arséniure de Gallium (AsGa) ou Nitrure de Gallium (GaN).

12. Dispositif selon la revendication 3, **caractérisé en ce que** les émetteur-récepteurs comportent un mélangeur (13) pour moduler les signaux émis.

## Patentansprüche

1. Verfahren zum Erzeugen von falschen Echos zu einem Detektor (4), wobei der Detektor ein Radarsignal (S1) emittiert und dann Echos des Radarsignals erkennt, wobei das Verfahren das Erzeugen mehrerer aus mehreren Richtungen kommender falscher Echos zulässt, wobei das Verfahren an Positionen, die in den Richtungen liegen, von denen die falschen Echos kommen, Folgendes beinhaltet:
a) einen Schritt des Empfangens wenigstens eines Teils des Radarsignals (S1);
b') einen Schritt des Emittierens eines Signals, das mit dem Signal (S1) im Wesentlichen identisch ist, in Richtung jeder der anderen Positionen (SBx),
wobei das Verfahren **dadurch gekennzeichnet ist, dass**:
b") das Emittieren eines Signals, das mit dem Signal (S1) im Wesentlichen identisch ist, auch in Richtung des Detektors (SRx) erfolgt; und dadurch, dass:
das im Wesentlichen identische Signal an jeder der anderen Positionen empfangen wird, von denen ein anderes im Wesentlichen identisches Signal wiederum in Richtung des Detektors (SRx') und in Richtung jeder der anderen Positionen (SBx) emittiert wird, so dass jede Position mehrere Signale (SBx) empfängt, die im Wesentlichen mit dem vom Detektor emittierten Radarsignal identisch sind, und mehrere im Wesentlichen identische Signale zu dem Detektor (SRx, SRx', SRx", SRx"',..., SRx⁽ⁿ⁾) emittiert, der mehrere zeitlich aufeinander folgende falsche Echos (SRx, SRx', SRx", SRx"',..., SRx⁽ⁿ⁾) erkennt, die aus jeder der Richtungen kommen, in denen sich eine Position befindet.

2. Verfahren nach Anspruch 1, **dadurch gekennzeichnet, dass** jede Mehrzahl von zeitlich aufeinander folgenden falschen Echos, die aus einer gegebenen Richtung kommen (SR2, SR2', SR2", SR2"',..., SR2⁽ⁿ⁾), vom Detektor (4) so interpretiert werden, dass sie einer Mehrzahl von Zielen entsprechen, die sich in mehreren Entfernungen befinden.

3. Vorrichtung zum Erzeugen von falschen Echos zu einem Detektor (4), wobei der Detektor ein Radarsignal (S1) emittiert und dann Echos des Radarsignals erkennt, wobei die Vorrichtung mehrere nicht am selben Ort befindliche Transceiver umfasst, die falsche Echos erzeugen, wobei die Vorrichtung **dadurch gekennzeichnet ist, dass** jeder Transceiver so ausgelegt ist, dass er nach dem Empfang wenigstens eines Teils des vom Detektor emittierten Radarsignals (S1) ein mit dem Signal im Wesentlichen identisches Signal in Richtung des Detektors (SRx) und in Richtung der anderen Transceiver (SBx) sendet, wobei das im Wesentlichen identische Signal von den anderen Transceivern empfangen wird, die so ausgelegt sind, dass sie wiederum ein anderes im Wesentlichen identisches Signal in Richtung des Detektors (SRx') und in Richtung der anderen Transceiver (SBx) emittieren, so dass jeder Transceiver mehrere Signale (SBx) empfängt, die mit dem vom Detektor emittierten Radarsignal im Wesentlichen identisch sind, und mehrere im Wesentlichen identische Signale (SRx, SRx', SRx", SRx"',..., SRx⁽ⁿ⁾) zum Detektor emittiert, der mehrere falsche Echos (SRx, SRx', SRx", SRx"',..., SRx⁽ⁿ⁾) erkennt, die zeitlich aufeinander folgen und die aus jeder der Richtungen kommen, in denen sich ein Transceiver befindet.

4. Vorrichtung nach Anspruch 3, **dadurch gekennzeichnet, dass** der Detektor (4) jede Mehrzahl von falschen Echos, die zeitlich aufeinander folgen und aus einer Richtung kommen, in der sich ein Transceiver befindet (SR2, SR2', SR2", SR2"',..., SR2⁽ⁿ⁾), als einer Mehrzahl von Zielen entsprechend interpretiert, die sich in mehreren Entfernungen befinden.

5. Vorrichtung nach Anspruch 3, **dadurch gekennzeichnet, dass** die Transceiver mobil sind und nach dem Empfang des vom Detektor emittierten Radarsignals (S1) und nach dem Empfang eines von einem Transceiver emittierten Signals (SBx) ein im Wesentlichen identisches Signal in alle Richtungen emittieren.

6. Vorrichtung nach Anspruch 3, **dadurch gekennzeichnet, dass** die Transceiver Breitband-Transceiver sind.

7. Vorrichtung nach Anspruch 3, **dadurch gekennzeichnet, dass** die Transceiver mit einer Fernsteuerung fernaktiviert werden können.

8. Vorrichtung nach Anspruch 3, **dadurch gekennzeichnet, dass** die Transceiver eine Vorrichtung (15) umfassen, mit der die Emissionen vor dem Empfang eines neuen vom Detektor (4) emittierten Radarsignals (S2) gestoppt werden können.

9. Vorrichtung nach Anspruch 8, **dadurch gekennzeichnet, dass** die Vorrichtung (15), mit der die Emissionen vor dem Empfang eines neuen vom Detektor übertragenen Radarsignals gestoppt werden können, Folgendes umfasst:
- eine Vorrichtung (16), mit der das vom Detektor (4) emittierte Radarsignal (S1) nach dem Empfang eines Signals von den von den anderen Transceivern (SBx) emittierten Signalen unterschieden werden kann;
- einen Zähler (17), mit dem die Zeit gemessen werden kann, die seit dem Empfang des vom Detektor emittierten Radarsignals (S1) verstrichen ist;
um die Emissionen vor dem Verstreichen einer Periode (PRI) zu stoppen, die gleich dem Zeitintervall ist, das zwei vom Detektor emittierte Radarsignale trennt.

10. Vorrichtung nach Anspruch 3, **dadurch gekennzeichnet, dass** die Transceiver einen Zirkulator (11) oder einen Schalter zum abwechselnden Aktivieren einer Empfangskette (R) oder einer Sendekette (T) umfassen.

11. Vorrichtung nach Anspruch 10, **dadurch gekennzeichnet, dass** die Empfangskette (R) oder die Sendekette (T) Verstärker (12a, 12b, 14a, 14b, 14c) auf der Basis von Galliumarsenid- (AsGa) oder Galliumnitrid- (GaN) Technik umfasst.

12. Vorrichtung nach Anspruch 3, **dadurch gekennzeichnet, dass** die Transceiver einen Mixer (13) zum Modulieren der emittierten Signale umfassen.

## Claims

1. A method for generating false echoes toward a detector (4), said detector transmitting a radar signal (S1) then detecting echoes from said radar signal, said method allowing the generation of a plurality of false echoes coming from a plurality of directions, said method, at positions located in the directions from which the false echoes originate, comprising:
a) a step of receiving at least part of said radar signal (S1);
b') a step of transmitting a signal that is substantially identical to said signal (S1) in the direction of each of the other positions (SBx),
said method being **characterised in that**:
b") the transmission of a signal that is substantially identical to said signal (S1) is also carried out in the direction of the detector (SRx); and **in that**:
said substantially identical signal is received at each of the other positions, from which another substantially identical signal is in turn transmitted in the direction of the detector (SRx') and in the direction of each of the other positions (SBx), so that each position receives a plurality of signals (SBx) that are substantially identical to the radar signal transmitted by the detector, and transmits a plurality of substantially identical signals toward the detector (SRx, SRx', SRx", SRx"',..., SRx⁽ⁿ⁾), which detects a plurality of false echoes (SRx, SRx', SRx", SRx"',..., SRx⁽ⁿ⁾) in temporal succession, which come from each of the directions in which a position is located.

2. The method according to claim 1, **characterised in that** each plurality of false echoes in temporal succession that come from a given direction (SR2, SR2', SR2", SR2"',..., SR2⁽ⁿ⁾) is interpreted by said detector (4) as corresponding to a plurality of targets located at a plurality of distances.

3. A device for generating false echoes toward a detector (4), said detector transmitting a radar signal (S1) then detecting echoes from said radar signal, said device comprising a plurality of non-colocalised transceivers generating false echoes, said device being **characterised in that** each transceiver is designed to transmit, on reception of at least part of said radar signal (S1) transmitted by said detector, a signal that is substantially identical to said signal in the direction of the detector (SRx) and in the direction of the other transceivers (SBx), said substantially identical signal being received by the other transceivers that are designed to transmit in turn another substantially identical signal in the direction of the detector (SRx') and in the direction of the other transceivers (SBx) so that each transceiver receives a plurality of signals (SBx) that are substantially identical to the radar signal transmitted by the detector and transmits a plurality of substantially identical signals (SRx, SRx', SRx", SRx"',..., SRx⁽ⁿ⁾) toward the detector, which detects a plurality of false echoes (SRx, SRx', SRx", SRx"',..., SRx⁽ⁿ⁾) in temporal succession, which come from each of the directions in which a transceiver is located.

4. The device according to claim 3, **characterised in that** said detector (4) interprets each plurality of false echoes in temporal succession that come from a given direction in which a transceiver is located (SR2, SR2', SR2", SR2"',..., SR2⁽ⁿ⁾) as corresponding to a plurality of targets located at a plurality of distances.

5. The device according to claim 3, **characterised in that** the transceivers are mobile and transmit, on reception of said radar signal (S1) transmitted by the detector and on reception of a signal (SBx) transmitted by a transceiver, a substantially identical signal in all directions.

6. The device according to claim 3, **characterised in that** the transceivers are wideband transceivers.

7. The device according to claim 3, **characterised in that** the transceivers can be remotely activated using a remote control.

8. The device according to claim 3, **characterised in that** the transceivers comprise a device (15) allowing transmission to be stopped before the reception of a new radar signal (S2) transmitted by said detector (4).

9. The device according to claim 8, **characterised in that** said device (15) that allows transmission to be stopped before the reception of a new radar signal transmitted by said detector comprises:
- a device (16) allowing, on reception of a signal, said radar signal (S1) transmitted by said detector (4) to be discriminated from the signals transmitted by the other transceivers (SBx);
- a counter (17) allowing the measurement of the time that has elapsed since the reception of said radar signal (S1) transmitted by said detector;
so as to stop transmitting before a period (PRI) has elapsed that is equal to the time interval separating two radar signals transmitted by the detector.

10. The device according to claim 3, **characterised in that** the transceivers comprise a circulator (11) or a switch for alternately activating a reception chain (R) or a transmission chain (T).

11. The device according to claim 10, **characterised in that** said reception chain (R) or said transmission chain (T) comprises amplifiers (12a, 12b, 14a, 14b, 14c) based on gallium arsenide (AsGa) or gallium nitride (GaN) technology.

12. The device according to claim 3, **characterised in that** the transceivers comprise a mixer (13) for modulating the transmitted signals.
